# EUROPEAN PATENT APPLICATION

(11) **EP 0 685 209 A1**
(43) Date of publication of application: **06.12.1995**
(21) Application number: 95902144.5
(22) Date of filing: 01.12.1994
(51) Int. Cl.: A61C 8/00

(54) **MEANS FOR FIXING PROSTHETIC SUPERSTRUCTURES TO OSTEOINTEGRATED IMPLANTS**

(30) Priority: 03.12.1993 ES 9302548; 11.03.1994 ES 9400515
(71) Applicant: Toboso Ramon, Jes s, E-03300 Orihuela (ES)
(72) Inventor: Toboso Ramon, Jes s, E-03300 Orihuela (ES)
(74) Representative: Ungria Lopez, Javier
(86) International application number: ES9400131
(87) International publication number: WO9515128

(57) **Abstract**

The fixing means are comprised of a pin (13) which penetrates into a superstructure (8) and into the implant (1), holding them efficiently and without clearance in the longitudinal direction. Transversely and in order to avoid rotations between said elements (1 and 8), the latter are secured by coupling means of the keytype. The fixing is irreversible, except by breaking with the appropiated dentist tooling a region of the pin (13). There is provided another pin which is provisional and which provides for reversible fixings without break, in order to facilitate treatments such as prosthetic superstructure and a transgingival healing of the gums, applying respectively in such cases a clinico-prosthetic superstructure and a transgingival healing bushing, specially designed. In another embodiment, there is provided a single type of pin (28) which is valid for all operations and functions, said pin presenting different and stable geometrical configurations according to its temperature. In one of said configurations, said pin may be introduced into and extracted from its housing with much ease while in another configuration, corresponding to the human body temperature, said pin adopts a shape similar to that of the definitive pins of the other embodiment, providing for a strong securing between the implant (34) and the prosthesis (35).

## Description

### OBJECT OF THE INVENTION

As expressed in the title of this specification, the present invention refers to a means for fixing prosthetic superstructures to osteointegrated implants, whose purpose consists of providing a rapid, novel and advantageous fixing means with respect to the existing ones, among the dental implants that are connected to the jaw bone and the pieces or superstructures that are to be placed and fastened in said implants; also simplifying and shortening the corresponding clinical procedures.

It is based on the use of a clip or pin that is placed rapidly and effectively between the two bodies to be fixed, in such a way that both, the superstructure and the implant, remain in close contact, without being able to move or rotate one of said bodies with regard to the other.

Once the cited pin is put in place, the fixing is irreversible, except by destroying the same, for which purpose there is a specially designed area. However, another type of pin that is removed without the need of being destroyed has been provided for, so that different tests and provisional fixings can be done on the patient.

In another embodiment a pin in a material with thermal memory has been designed in such a way that said pin has different and stable geometric shapes according to the temperature range in which it is found; whereby the need of complementary pieces in taking impressions is eliminated, and the destruction of the pin avoided when the prosthesis is to be removed from the implant.

### BACKGROUND OF THE INVENTION

Osteointegranted implants used in dentistry, consisting normally of tubular and screwed piece, preferably made out of titanium and provided with different rough areas and grooves that facilitate attachment to the patient's jaw bone, are known.

After making the implant in said bone, a certain amount of time has to be waited for healing and osteointegration before including in the free area of the implant the additional pieces that make it possible to put the prosthesis or false teeth required for the case in place.

For this inclusion, at the free ends of the implants the mouth of an inside duct or channel with threaded walls projects, in such a way that the superstructure or additional piece to be included is screwed directly in said channel by means of a threaded rod or screw provided for this purpose.

This way of including the superstructures by means of screwing has inconveniences, such as the danger of the included piece becoming loose, or such as the rotation needed to fix and tighten said piece, since said movement is very harmful to the osteointegration of the implant.

### DESCRIPTION OF THE INVENTION

To achieve the aims and to overcome the inconveniences cited above, the invention consists of a new means for fixing prosthetic superstructures to osteointegrated implants, that foresees the use of implants whose characteristics of fixing to the bone are equivalent to those of conventional implants; but instead of having, like the latter, a threaded canal inside, it has a smooth duct whose innermost end leads to a housing or hole with a larger diameter than the duct itself.

This housing allows the fixing of the end flanges of a clip-type pin that will fix the implant to the superstructure, for which purpose, the latter also has a duct that passes through it, also having a top area that will house the head of the cited pin.

The pin consists of said head and some legs that come out from the same and that end in both perpendicular flanges or elbow-shaped parts.

Upon introducing the pin through the ducts of the superstructure and of the implant, the legs thereof approach each other, bending to a certain degree. So that this bending is not limited by the contact between said legs, the pin has been designed in such a way that the same remain unaligned, that is to say, they are located at different bending planes.

The housing of the implant has a certain slant in the walls that connect with the corresponding mouth of the duct, so that upon the flanges of the legs of the pin fitting in a larger degree in these walls the contact between the implant and the superstructure is closer.

The length of the legs of the pin corresponds with the combined length of the ducts of the implant and the superstructure, in such a way that when the flanges of the pin reach the housing thereof, the head of the same rests in the bottom of the cavity provided for it in the superstructure.

Hence, the implant and the superstructure remain perfectly connected without the possibility of longitudinal movement. Besides, so that there is no possibility of rotation of the superstructure with regard to the implant, the top end of the latter has a preferably prismatic-hexagonal projection that surrounds the mouth of the duct and that corresponds with the cavity of the same shape, existing in the bottom end of the superstructure, surrounding the mouth of the canal or duct of the latter, in such a way that both pieces are fit in without the possibility of rotation.

This configuration allows the pin not to endure stresses, pressures or tensions since it remains established as a totally passive connecting element.

Other advantages of this shape are that it enables perfect and very rapid adaptation between the implant and the corresponding superstructure, which eliminates the danger of it coming loose since no screws are used and the danger of harming the osteointegration of the implant is avoided since no rotation is required to fasten the superstructure.

Once the pin has been fixed, and due to the shape of its flanges, the spontaneous reversibility of the fixing is practically impossible, since the pin would have to be broken, which is highly improbable, given that once it has been fixed it becomes a passive piece that does not endure any stress.

This irreversibility constitutes another advantage, especially when reversibility is possible and it is provided for if the physician considers it opportune, since he can break the pin, by cutting the head thereof with a diamond cutter, for which reason said head has a central thinner and especially designed area to facilitate the cutting thereof.

Besides, a provisional pin that can be easily removed since its end flanges are shorted and rounded, in such a way that upon pulling on the pin, said flanges can come out of their housing, has been provided for.

This provisional pin will normally be used to fasten a clinico-prosthetic superstructure, also different from the definitive one, to the implant in the procedure of taking impressions. The provisional pin can also be used to fasten the transgingival healing bushing for a certain period of time.

The head of the provisional pin is also different, since it includes some flanges similar to those of the free ends of the legs thereof and corresponding to the cavities existing in the clinico-prosthetic superstructure. Besides, said head is higher and includes a larger hollow space under the union of the legs thereof. These different characteristics are provided for in order to facilitate the cited procedure of taking impressions and obtaining a model that is a copy of the location of the implants in the patient's mouth.

In taking impressions the impression basin is prepared with the material chosen by the professional, and it will be introduced into the patient's mouth, who will have the clinico-prosthetic superstructures fixed to the provisional pins.

Due to the tabs or overlaps that these clinico-prosthetic superstructures have, upon removing the basin the combined removal of said superstructures and of the provisional pins is produced, obtaining the corresponding taking of impressions.

To obtain the copy of the implants in the patient's mouth some duplicate implants that will fit in the superstructures fixed to the impression taking material before placing the corresponding plaster on said material are used; in such a way that when the plaster hardens and it is separated from the cited material, a true copy of the location of the implants in the patient's mouth will be obtained.

Another embodiment in which the use of additional removable pins is used, as well as the destruction thereof when the prosthesis is to be removed from the implant has been provided for. However, there is a fixing at least as effective as with the non-removable pin of the above mentioned embodiment.

This other embodiment consists of varying slightly the geometric shape of the pin so that it can penetrate in and be removed from the axial canal of the implant without any problem. Besides, the pin is made out of an alloy or material that has a clearly defined thermal memory, such as for example an alloy of nickel and titanium, 60 and 40 % respectively. Goods results are also obtained with other combinations of metals such as gold and cadmium, iron and platinum, or aluminum and nickel, though the alloy cited first of all is the one that provides the best practical results.

The slight variation of the geometric shape of the pin consists of bending the legs thereof inwardly, whereby the lateral extensions of the ends of the same have a total length approximately equal to the combined top part of the legs, right below the head of the pin. This geometry is given for a temperature of 17 or 18^{º} C, which will be the normal working temperature, and thus the pin can be introduced and removed without any difficulty from the canal of the implant, without the lateral extensions knocking against the top walls of the widened cavity of the bottom of the canal.

Leaving the pin long enough in the canal of the implant, it will acquire little by little but briefly the temperature of the implant, which logically corresponds to the 36 or 37^{º} C of the human body, whereby the pin expands and the geometric shape of the legs thereof varies, in such a way that the legs separate and they lose their bend so as to remain parallel, which implies that the end lateral extensions of the same are introduced in the cavity of the bottom of the canal of the implant, determining a retention as effective as when, as it happened in the previous embodiment, said extensions were introduced in the cavity of the implant by the elastic jump of the same.

The basic advantage of the pin of this last embodiment is that if desired or if it is necessary to remove it, it is not necessary to break it at the weakened area of its head, but rather it need merely be adequately cooled so that it again reaches the temperature of 17 or 18^{º} C, which can be caused by spraying a nitrogen compound on the head of the pin, after which it is freely pulled out of its location due to the recovery of its initial geometric shape.

In this embodiment it is not necessary to give the top walls of the cavity of the implant a certain slant. Said slant was given in the previous embodiment to facilitate the removal of the traditional or removable pins, but as in this case a single pin that always has the possibility of being removed and that allows all the functions and work to be done suffices, these top walls can be perfectly horizontal, whereby the retention of the pin is even better, with the added advantage that it determines less discomfort for the patient and greater ease in the dentist's work.

Hereinafter, to provide a better understanding of this specification and forming an integral part of the same, some figures in which the object of the invention has been represented in an illustrative and non-restrictive manner, are attached hereto.

### BRIEF DESCRIPTION OF THE FIGURES

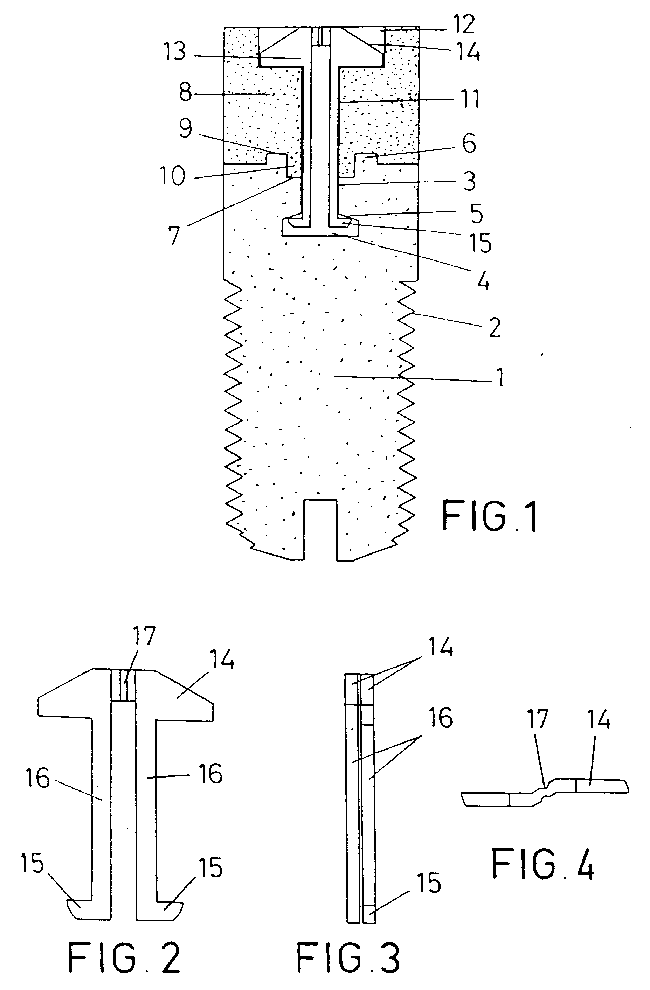

Figure 1 represents a raised and diametrically sectioned view of an implant connected to a superstructure by means of a pin, according to the new fixing of prosthetic superstructures to osteointegrated implants made possible by the present invention.

Figure 2 represents a raised view of a pin according to the present invention and referred to in previous figure 1.

Figure 3 represents a profile view of the pin alluded to in figures 1 and 2.

Figure 4 represents a top plan view of the pin mentioned in the previous figures.

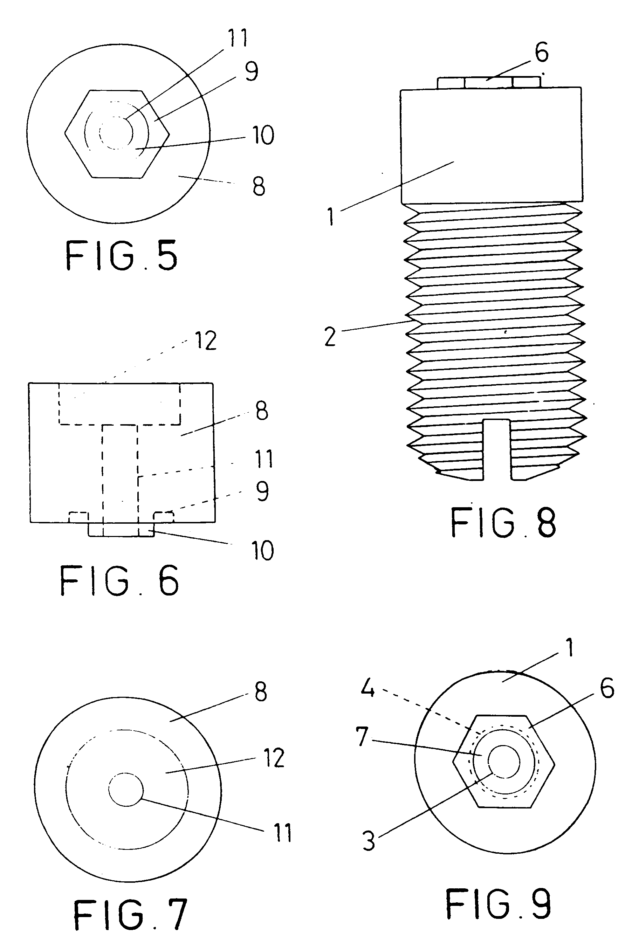

Figure 5 represents a bottom plan view of the superstructure according to the present invention and referred to in figure 1.

Figure 6 represents a raised view of the superstructure referred to in previous figure 5.

Figure 7 represents a top plan view of the superstructure mentioned in the previous figures 5 and 6.

Figure 8 represents a raised view of the implant according to the present invention and referred to in figure 1.

Figure 9 is a top plan view of the implant of previous figure 8.

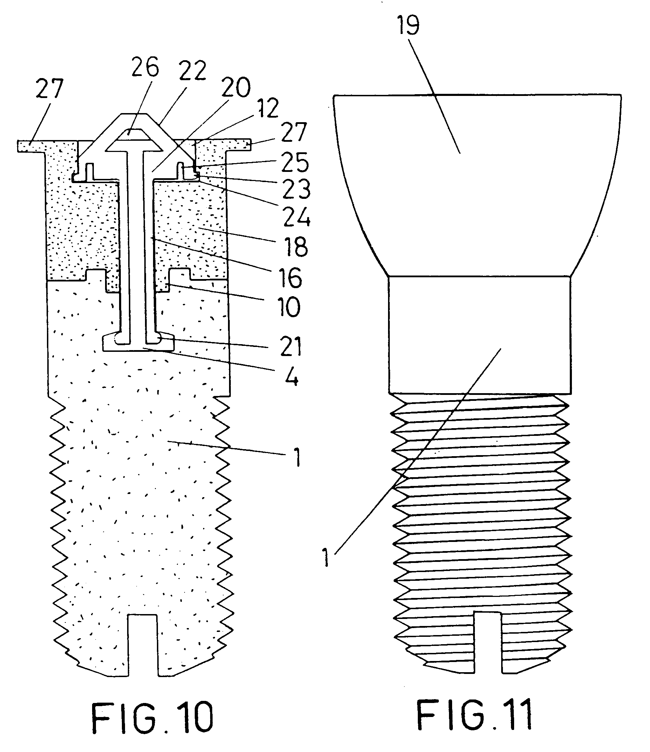

Figure 10 represents a raised and diametrically sectioned view of an implant connected to a clinico-prosthetic superstructure by means of a provisional pin and according to the present invention.

Figure 11 represents a raised view of an implant connected to a transgingival healing bushing by means of a provisional or clinico-prosthetic pin, according to the new fixing of the present invention.

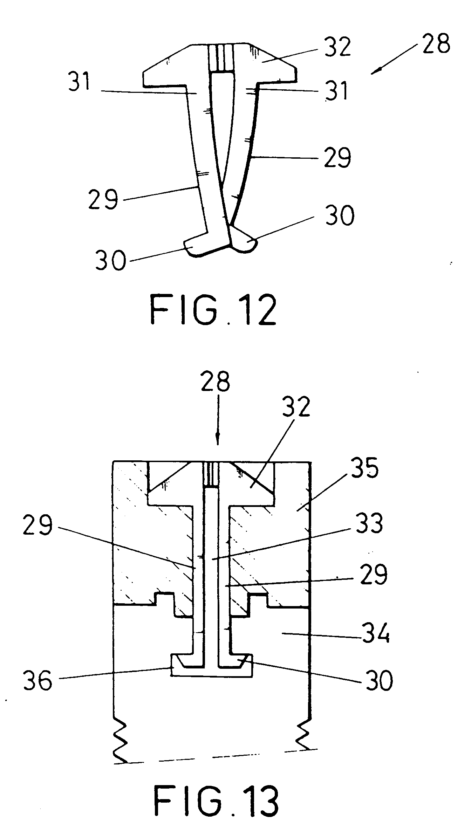

Figure 12 represents a front raised view of the pin of another embodiment of the present invention. In this figure 12 said pin has its initial geometric shape, that is to say, the one it has at a temperature lower than the temperature of the human body, and showing the characteristic bending of its legs.

Figure 13 represents a raised and diametrically sectioned view of an osteointegrated implant and a dental prosthesis, fixed with a pin like the one of the above figure 12. In this figure 13, the pin has its final geometric shape, that is to say, the one it has at a temperature similar to that of the human body.

### DESCRIPTION OF SEVERAL EMBODIMENTS OF THE INVENTION

Hereinafter a description is made of several embodiments of the invention, referring to the numbering used in the figures.

Hence, the new fixing of prosthetic superstructures to osteointegrated implants of the first embodiment includes an approximately cylindrical implant (1), whose outside side surface (2) has conventional characteristics suitable for integration in the corresponding jaw bone.

However, this implant (1) has the particularity that it has a center canal (3) in the axial direction, with smooth inside surfaces, instead of the threaded canal that is conventionally included.

Other characteristic features of the implant (1) are that said canal (3) leads to an inside cavity (4) with a diameter larger than the canal (3) and whose walls (5) connecting with it have a certain slant with regard to the horizontal line and downward. Besides, the top end of the implant (1) has in the center a hexagonal projection (6) in the center of which there is a recess (7) whose contour has a circular crown shape, the inside edge of this cavity (7) connecting to the mouth of the canal (3.)

This embodiment of the invention includes a superstructure (8) whose bottom end fits like a key in the top end of the implant (1), in such a way that said bottom end has a prismatic-hexagonal recess (9) from whose centers extends a cavity (10) whose contour has a circular crown shape.

Besides, the superstructure (8) includes a canal (11) that passes through it axially and whose diameter corresponds to that of the anterior canal (3).

The top end of the superstructure (8) has in the center a cylindrical cavity (12) open towards the outside and with a diameter larger than the canal (11), in such a way that the latter leads to the center of the bottom of said cylindrical cavity (12).

This key-type fitting in between the superstructure (8) and the implant (1) ensures the impossibility of rotation of one with regard to the other and stabilizes the sitting of both parts (1) and (8).

To ensure the fixing in the longitudinal direction of said parts and replacing the traditional screws, a pin (13) that joins these parts (1) and (8) in a clip fashion has been advantageously and novelly provided for.

For this purpose, this pin (13) is introduced through the consecutive canals (11) and (3) and until the head (14) of the pin (13) knocks against the bottom of the cylindrical cavity (12). At that moment, some flanges (15) of the bottom end of the pin (13) will have penetrated in the inside cavity (4) of the implant (1), producing a strong retention, since the length of the legs (16) of the pin (13) corresponds to the combined length of the canals (3) and (11). Besides, the slanted walls (5) of the inside cavity (4) optimize the total entry of the pin (13) without there remaining at the end of said entry clearance in the vertical arrangement of the pin (13).

On the other hand, the flanges (15) of the bottom end of the pin (13) have a pointed edge, which like a fishhook nail into the slanted walls (5) if an attempt is made to remove the pin, hence said removal is not possible.

The part opposite these pointed edges in the flanges (15), is rounded however to facilitate the passing of the same through the canals (11) and (3).

Other characteristics of the pin (13) are that the legs (16) thereof, being parallel, are located at different bending planes so that in the passing thereof through the canals (11) and (3) they do not knock against each other. Besides, the head (14) of the pin (13) has a central thinner area (17) that facilitates breaking thereof by means of the suitable dentist's tool, so that the pin (13) may be removed and the superstructure (8) may be separated from the implant (1) in the event that it is necessary to do so. On the contrary, spontaneous breaking of said thinner area (17) is practically impossible, since once the pin (13) has been installed it remains as a passive area that hardly endures any stress.

Aside from the described parts (1), (8) and (13), other parts are provided for to take impressions or other normal procedures in dentistry, such as a clinico-prosthetic superstructure (18), a transgingival healing bushing (19) and a provisional or clinico-prosthetic pin (20).

This superstructure (18) and this bushing (19) have the same characteristics of hexagonal key-type coupling with the implant (1) that existed in the coupling of the latter with part (8). However, the longitudinal fixing is carried out with the provisional pin (20), since in these cases the reversibility of the fixing is of interest.

To facilitate said reversibility, the corresponding flanges (21) of the provisional pin (20) are shorter and rounded on all their edges, so that upon pulling on the pin (20) said flanges (21) can come out of the inside cavity (4) by exerting a small force.

Besides, the provisional pin (20) includes on the side ends of its head (22) other flanges (23) that act with regard to some side recesses (24) of the top cylindrical cavity (12) of the superstructure (18) in the same way that the flanges (21) act in the cavity (4). To help the bending of the flanges (23) the head (22) has some grooves (25) behind them.

On the other hand, the cited head (22) includes a larger hollow space (26) in the area of connection with the legs (16). This hollow space is provided for the entry and gripping of the impression material in the taking of impressions. For this same purpose some overlaps or tabs (27) existing in the sides of the top end of the clinico-prosthetic superstructure (18) are provided for.

The procedure for taking impressions and the subsequent obtainment of a mold that is a true copy of the location of the implants in the patient's mouth, by means of the cited provisional elements (18) and (20), is carried out just as it was described in the "description of the invention" section of this specification.

The transgingival healing bushing (19) is a part that is placed over the implant (1) from the moment when the already osteointegrated implant is exposed, until the definitive prosthesis is put in place. The main characteristic of this bushing (19) is that the entire area that has contact with the gum is rounded, to mold the papilla, and thus permit prostheses to have a better appearance. The material that provides better results is that in which the contact with the gum is made of porcelain, and custom-made by the prosthetist for each case; however there are rounded standard size preforms.

Another embodiment of the invention replaces the different pins (13) and (20) by a single special pin (28) whose legs (29) are bent towards the inside, in such a way that the width existing between the free ends of the lateral extensions thereof (30) is similar to the width existing between the top parts (31) of the areas that remain under the head (32) of the pin (28); as long as the pin (28) is at a temperature of about 18^{º} C or below.

In these conditions the pin (28) penetrates perfectly in the canal (33) that has the corresponding osteointegrated implant (34) and the prosthesis (35) and can likewise be perfectly removed without any difficulty.

As the pin (28) heats up to the temperature of the prosthesis (35) and the implant (34), which will be the temperature of the human body, said pin (28) expands and its legs (29) take on a straight configuration parallel to each other, losing the bend that we mentioned above; in such a way that they adjust to the walls of the canal (33) and in such a way that the lateral extensions (30) are introduced in a cylindrical cavity (367 of the top horizontal wall, existing in the implant (34), in the bottom of the canal (33) and having a larger diameter than the latter.

This determines a strong and continuous fastening of the prosthesis (34) to the implant (35), maintaining all the advantages that the previous embodiment had and adding the characteristic, also advantageous, that this pin (28) whose design and constitution are definitive or permanent, can be removed without the need of breaking it, for which purpose it suffices to cool it by means of any method so that it recovers its original geometric shape upon reaching 18^{º} C again. This cooling can be done rapidly by spraying any nitrogen compound thereon.

So that the transfer of temperature is done rapidly and so that the thermal memory of the pin (28) is suitable, the pin is made out of a metal alloy of 60% nickel and 40% titanium in the present embodiment, as it is the one that has experimentally provided the best results; though as it has already been indicated above there are other alloys that also provide satisfactory results.
(received by the International Office on 24 May 1995 (24.05.95) claims 1-7 replaced by modified claims 1-11 (4 pages))
(Original claim 1 has been divided up into modified claims 1 and 4.
Original claim 2 has been divided up into modified claims 2, 3 and 5.
Original claims 3-4 have been replaced by modified claims 6-7.
Original claim 5 has been divided up into modified claims 8 and 9.
Original claims 6-7 have been replaced by modified claims 10-11.)
1. A system for fastening an odontological prosthetic superstructure (8), (18), (35) to an osteointegrated implant (1) (34) without the use of screws; characterized in that the implant (1),(34) includes a first straight and axial canal that leads into an inside cavity (4),(36) existing in the implant (1),(34); the superstructure (8), (18), (35) includes projections (10) and recesses (9) in a first contact end and the implant (1),(34) includes corresponding recesses (7) and projections (6) in a second contact end, said projections (6),(10) and recesses (7),(9) shaped so as to allow the key-type fitting between the implant (1),(34) by means of said projections (6),(10) and recesses (7)(9); the superstructure (8),(18) includes a second axial canal (11) located in such a way that it communicates with the first canal (3) upon the superstructure (8),(18) being inserted in the implant (1), (34), the second canal (11) leading into an outside cavity (12) open towards the outside in a free end of the superstructure (8),(18),(35); the system including a fixing means that comprises a pin (13),(20),(28) that comprises one elongated part, a first end and a second end, the first end being shaped in such a way that it is capable of being introduced in the second canal (11) and the first canal (3) and remaining supported on a top wall (5) of the inside cavity (4),(36) while the second end is shaped in such a way that it is capable of remaining supported on a bottom wall of the outside cavity, the pin (13),(20),(28) thus defining an anchoring means between the implant (1),(34) and the superstructure (8),(18),(35).
2. A system according to clai 1, wherein the pin (13),(20),(28) comprises a head (14),(22),32) that constitutes said second end, two legs (16),(29) that constitute the elongated part and that are joined by the head (14,(22), as well as two flanges (15),(2)(30) that constitute said first end, the distance between a bottom surface of the head (14),(22), (32) and a top surface of the two flanges (15),(21) essentially corresponding to the combined length of the first canal (3) and the second canal (11).
3. A system according to claim 2, wherein the elongated part of the pin (13),(20),(28) has a width that essentially corresponds to the width of the first (3) and second (11) canals.
4. A system according to any of the claims 1-3, wherein the top wall (5) of the inside cavity (4) is slanted.
5. A system according to claim 4, wherein the head (14) includes a thin area (17) that allows it to be broken by means of an a suitable dentist's tool, and the flanges (15) include sharp top side ends and rounded bottom side edges; in such a way that when the head (14) of the pin (13) rests on the bottom wall of the outside cavity (12) the flanges (15) of the pin (13) remain inside the inside cavity (4) effecting a firm, irreversible anchoring without clearance.
6. A system according to any of the claims 1-4, wherein the superstructure (18) is a clinico-prosthetic superstructure provided with some tabs (27) in some sides of the top end thereof, and with some side recesses (24) in a bottom part of some side walls of the outside cavity (12) thereof; the pin (20) is a provisional pin whose head (22) extends in a greater degree, has a hollow space (26) that permits the entry of the impression material, and has some bottom grooves (25) that facilitate the bending of some end flanges (23) of said head (22) provided for the reversible anchoring in said side recesses (247; the flanges (21) have a reduced length and are completely round, lacking pointed ends, in order to facilitate the reversibility of the fixing provided by this pin.
7. A system according to claim 6, that includes a transgingival healing bushing (19), a slightly curvi-convex side **surface** preferably made out of porcelain, that is connected to the corresponding implant (1) by means of a pin (20) in a way similar to how it is done by said implant (1) and the superstructure (18).
8. A system according to any of the claims 1-3, wherein the pin (28) is a definitive and recoverable pin that has a well defined thermal memory, corresponding to a stable condition of greater expansion at the temperature of the human body, while a stable condition corresponding to a greater contraction is found at several degrees Centrigrade below.
9. A system according to claim 8, wherein the pin (28) is made out of an alloy of nickel and titanium, 60 and 40% respectively, that provides the cited conditions of thermal stability at approximately 37 and 17^{º} C.
10. A system according to claim 9, wherein, under the head (32) of the pin (28) extend some legs (29) slightly bent towards the inside and with the convexity outward, in such a way that the width that the combination of said legs (29) has right under the head (32) decreases progressively until some end lateral extensions (30) that proviode a greater width approximately equal to the initial width under the above mentioned head (32) are reached; it being provided for that said geometric shape corresponds to the condition of contraction or low temperature, in such a way that as the temperature rises, around 37^{º} C, the legs (29) become approximately straight and parallel, being more separated, and the width determined by the end lateral extensions thereof (30) is greater than the initial width of the legs (29) under the head (32).
11. A system according to claim 10, wherein the inside cavity (36) of the implant (34) has a top horizontal wall.

## Claims

1. Means for fixing prosthetic superstructures to osteointegrated implants, of the type that are used in dentistry, by advantageously and novelly avoiding the use of screws; characterized in that the implant (1) includes a straight and axial duct or canal (3) that leads into an inside cavity (4) with top inclined walls; a superstructure (8) corresponding to said implant (1) that fits in it in a key-like manner by means of projections and recesses (6, 7, 9 and 10) that both have in their contact ends; with the particularity that the superstructure (8) includes an axial duct or canal (11) corresponding to the previous duct or canal (3), and that leads into a cavity (12) open towards the outside in the free end of the superstructure (8).

2. Means for fixing prosthetic superstructures to osteo integrated implants, according to the above claim, characterized in that it has a pin (13) provided with a head (14) with a thinner area (17) that allows the breaking thereof by means of a suitable dentist's tool, extending from the bottom part of the head (14) some legs (16) with a length corresponding to the combined length of the above mentioned canals (13) and (11), with a combined width similar to the width of these same canals (3) and (11) and the free ends thereof being bent towards the outside, in such a way that they form some flanges (15) with their pointed top side ends and with their rounded bottom side edges; in such a way that when the head (14) of the pin rests on the bottom of the open cavity (12) as the pin has passed through the ducts or canals (11) and (3) of the superstructure (8) and of the implant (1) coupled together, the flanges (15) of the pin (13) remain inside the inside cavity (4) carrying out a firm, irreversible anchoring without clearance.

3. Means for fixing prosthetic superstructures to osteointegrated implants, acording to the above claims, characterized in that it has a clinico-prosthetic superstructure (18) similar to the previous definitive superstructure (8) but provided with some overlaps or tabs (27) in the sides of the top end thereof, and with some side recesses (24) in the bottom part of the walls of the open cavity thereof (12); having provided for a provisional pin (20) whose head (22) extends to a larger degree, and which has a hollow space (26) that allows the entry of the impression material, and that has some bottom grooves (25) that facilitate the bending of some end flanges (23) of said head (22) provided for the reversible anchoring in the side recesses (24) mentioned above, having provided for the flanges (21) of the free ends of the legs (16) of this provisional pin (20) being shorter and completely rounded, lacking pointed ends, in order to facilitate the reversibility of the fixings provided by this provisional pin (20); this all permitting the simplification of the procedure of taking impressions and of constructing a copy of the implants and the patient's mouth.

4. Means for fixing prosthetic superstructures to osteointegrated implants, according to the above claims, characterized in that it has a transgingival healing bushing (19), a gently curviconvex side surface preferably made out of porcelain, that is connected to the corresponding implant (1) by means of a provisional pin (20) in a way similar to how it is done by said implant (1) with the clinico-prosthetic implant (18).

5. Means for fixing prosthetic superstructures to osteointegrated implants, according to the above claims, characterized in that a definitive and recoverable pin that has a well defined thermal memory has been provided for, the stable condition corresponding to the greater expansion to the temperature of the human body, while the one corresponding to greater contraction is found in several degrees Centrigrade lower; preferably making said pin (28) out of an alloy of nickel and titanium, 60 and 40 % respectively, that provides the cited conditions of thermal stability at about 37 and 17^{º} C.

6. Means for fixing prosthetic superstructures to osteointegrated implants, according to the above claim, characterized in that under the head (32) of the definitive and recoverable pin(28) extend some legs (29) slightly bent towards the inside and with the convexity outward, in such a way that the width that the combination of said legs (29) have under the head (32) decreases progressively until some end side extensions (30) that provide a greater width and approximately equal to the initial width under the above mentioned head (32) are reached; it being provided for that said geometric shape corresponds to the situation of contraction or low temperature, in such a way that as the temperature rises, around 37^{º} C, the legs (29) become approximately straight and parallel, they are more separated and the width determined by the end side extensions thereof (30) is much greater than the initial width of the legs (29) under the head (32).

7. Means for fixing prosthetic superstructures to osteointegrated implants, according to claims 1, 3, 5 and 6, characerized in that the cylindrical cavity (36) of the implant (34), in the event that the definitive and recoverable pin (28) is used, has a horizontal top wall that replaces the slanted wall (5) that facilitated in the other case the removal of the provisional pins (20).
